# EUROPEAN PATENT APPLICATION

(11) **EP 4 394 798 A1**
(43) Date of publication of application: **03.07.2024**
(21) Application number: 22217134.0
(22) Date of filing: 29.12.2022
(51) Int. Cl.: G21B 1/05, G21B 1/11, H05H 1/11, H01F 6/00

(54) **MAGNETIC MIRROR MACHINE**

(71) Applicant: Novatron Fusion Group AB, 163 47 Spånga (SE)
(72) Inventor: HOLMBERG, Rickard, 128 38 Skarpnäck (SE); JÄDERBERG, Jan, 163 47 Spånga (SE)
(74) Representative: AWA Sweden AB

(57) **Abstract**

A magnetic mirror machine for plasma confinement comprises a plurality of electromagnetic coils each circularly symmetric with respect to a common symmetry axis and disposed along said symmetry axis for creating an open-field-line plasma confinement area limited by a plurality of mirror areas of increased magnetic flux density relative to a central area of said plasma confinement area, wherein said magnetic mirror machine further comprises at least one further electromagnetic coil, wherein said further electromagnetic coil crosses a plane of an electromagnetic coil of said plurality of electromagnetic coils through said electromagnetic coil.

## Description

### Field of technology

The present disclosure relates to a magnetic mirror machine and to a method of operating a magnetic mirror machine.

### Background

Great efforts are being made to design a reactor for controlled fusion on earth. The most promising fusion process is between the hydrogen isotopes deuterium (²H) and tritium (³H). In the deuterium-tritium fusion presses, a ⁴He alpha particle, having a kinetic energy of about 3.5 MeV and a neutron, having a kinetic energy of about 14.1 MeV, are created.

For fusion to occur, nuclei must be in the form of a plasma having a temperature in the order of 150 million kelvins. Providing confinement for such a plasma remains a major challenge.

Plasma confinement involves confining the charged particles of the plasma. There are several different known magnetic configurations for plasma confinement. A well-known class of designs are magnetic mirror machines. Therein, particles follow magnetic field lines through the magnetic mirror machine, and are reflected in areas of increasing magnetic flux density at peripheral areas of the device.

In particular, such magnetic mirror machines for plasma confinement may comprise a plurality of electromagnetic coils each circularly symmetric with respect to a common symmetry axis and disposed along said symmetry axis for creating an open-field-line plasma confinement area limited by a plurality of mirror areas of increased magnetic flux density relative to a central area of said plasma confinement area.

One example of such a magnetic mirror machine known in the prior art is the Biconic cusp, wherein a first coil is arranged to carry a current in a first direction and a second coil arranged to carry a current in a second direction opposite to the first direction and wherein the first coil and the second coil are and longitudinally displaced in the device. The thus formed two parallel electromagnets with currents running in opposite directions create oppositely-directed electromagnetic fields, wherein the two fields may interact to form a plasma confinement area between the coils.

Other configurations are equally known.

There is always a need to improve such devices.

### Summary

It is an object of the present disclosure to solve, or at least mitigate, the above problem.

To this end, according to a first aspect, there is provided a magnetic mirror machine for plasma confinement, said magnetic mirror machine comprising a plurality of electromagnetic coils each circularly symmetric with respect to a common symmetry axis and disposed along said symmetry axis for creating an open-field-line plasma confinement area limited by a plurality of mirror areas of increased magnetic flux density relative to a central area of said plasma confinement area, wherein said magnetic mirror machine further comprises at least one further electromagnetic coil, wherein said further electromagnetic coil crosses a plane of an electromagnetic coil of said plurality of electromagnetic coils through said electromagnetic coil.

As part of the present inventive concept, it has been realized that in many typical configurations magnetic mirror machines, at least one plasma confinement area may comprise at least one point where the magnetic field vanishes, i.e., where B=0. At such a point, the magnetic moment of particles in the plasma is not conserved, as otherwise would be the case, causing the direction of the particle to be essentially randomized, potentially putting it in the magnetic mirror machine's loss cone, where the particle is not confined.

By arranging for a further electromagnetic coil as per the present inventive concept, such at least one point where the magnetic field vanishes may be eliminated, which thereby may allow for maintaining invariance of particle magnetic moment, which may improve plasma confinement.

Configurations know from the prior art may typically have azimuthal currents generating the magnetic field, so that the magnetic field vector B lies in the plane perpendicular to the azimuthal direction. The additional electromagnetic coil may add an axial current to the creating a non-zero azimuthal component to the magnetic field vector B, which may previously not be present, thereby removing the points where B=0, which may maintain the invariance of the magnetic moment and improving confinement.

In particular, with the further electromagnetic coil crossing a plane of at least one electromagnetic coil of the plurality of electromagnetic coils through said electromagnetic coil, a particularly compact geometry of the magnetic mirror machine may be achieved, since space middle of the magnetic mirror machine close to the symmetry axis may be utilized for the further electromagnetic coil. The further electromagnetic coil crossing the plane of an electromagnetic coil of the plurality of electromagnetic coils through the electromagnetic coil should be understood as the further electromagnetic coil passing inside the winding of the electromagnetic coil of the plurality of electromagnetic coil.

The at least one further electromagnetic coil may cross a respective plane of each coil of said plurality of electromagnetic coils. This may even further lead to a particularly compact geometry of the magnetic mirror machine.

The further electromagnetic coil may in at least one point be parallel to and adjacent to said symmetry axis.

The further electromagnetic coil may be a toroidal field coil.

The plurality of electromagnetic coils may comprise a first electromagnetic coil and a second electromagnetic coil, wherein said second electromagnetic coil is arranged to carry a current in an opposite direction to a current carried by said first electromagnetic coil, creating said plasma confinement area between said first electromagnetic coil and said second electromagnetic coil. This is a particularly advantageous application of the present inventive concept.

The plurality of electromagnetic coils may comprise a first magnet system comprising a first plurality of concentrically arranged electromagnetic coils, comprising a first electromagnetic coil arranged to carry a current in a first direction; and a second electromagnetic coil arranged to carry a current in a second direction opposite to said first direction; and a second magnet system comprising a second plurality of concentrically arranged electromagnetic coils, arranged with mirror symmetry with respect to said first magnet system relative to a symmetry plane located between said first magnet system and said second magnet system. This is a further particularly advantageous application of the present inventive concept.

The plurality of electromagnetic coils may further comprise a third magnet system arranged radially outside said plasma confinement area, said third magnet system comprising at least one electromagnetic coil. This is a further particularly advantageous application of the present inventive concept.

The plurality of electromagnetic coils may comprise a first inner coil arranged to carry a current in a first direction; and a second inner coil offset in an axial direction from said first inner coil and arranged to carry a current in a second direction opposite to said first direction, a first outer coil located radially outside said first inner coil and arranged to carry a current in said second direction; and a second outer coil located radially outside said second inner coil and arranged to carry a current in said first direction.

### Brief description of the drawings

The above, as well as additional objects, features and advantages of the present disclosure, will be better understood through the following illustrative and non-limiting detailed description of preferred embodiments, with reference to the appended drawings, where the same reference numerals will be used for similar elements, wherein:
Figs 1 and 2 are respective perspective and perspective-cross-sectional views of magnet systems comprised in a magnetic mirror machine according to a first configuration.
Figs 3a and 3b show, in respective cross-sectional views, simulated magnetic field lines generated by the magnet systems according to the first configuration.
Figs 4a and 4b show, in respective perspective views, simulated magnetic field lines generated by the magnet systems according to the first configuration.
Figs 5 and 6 are respective perspective and perspective-cross-sectional of magnet systems comprised in a magnetic mirror machine according to a second configuration.
Figs 7a and 7b show, in respective cross-sectional views, simulated magnetic field lines generated by the magnet systems according to the second configuration.
Figs 8a and 8b show, in respective perspective views, simulated magnetic field lines generated by the magnet systems according to the second configuration.
Figs 9 and 10 respective perspective and perspective-cross-sectional of magnet systems comprised in a magnetic mirror machine according to a third configuration.
Figs 11 and 12 show, in respective cross-sectional views, simulated magnetic field lines generated by the magnet systems according to the third configuration.
Figs 13a and 13b show, in respective perspective views, simulated magnetic field lines generated by the magnet systems according to the third configuration.

### Detailed description

As is generally known, plasma confinement devices may be based either on open magnetic field lines or closed field lines. A closed-field-line configuration may, for example, be realized with a toroidal magnetic field. An example of such a device is a tokamak.

Open-field-line plasma confinement devices, as known per se in the prior art, may operate by a principle of magnetic mirroring, wherein the charged particles of the plasma are reflected in areas of increasing magnetic flux density in peripheral regions of the confinement area.

A magnetic mirror machine may be a linear magnetic mirror machine with a first mirror area located at the first end of the magnetic mirror machine and a second mirror area located at the second end of the linear magnetic mirror machine. Alternatively, magnetic mirror machines with more elaborate configurations with more than two mirror areas are equally possible, such as in the case of a Biconic cusp.

Throughout this disclosure references will be made to figures showing simulated magnetic field lines, i.e., equal magnetic potential lines.

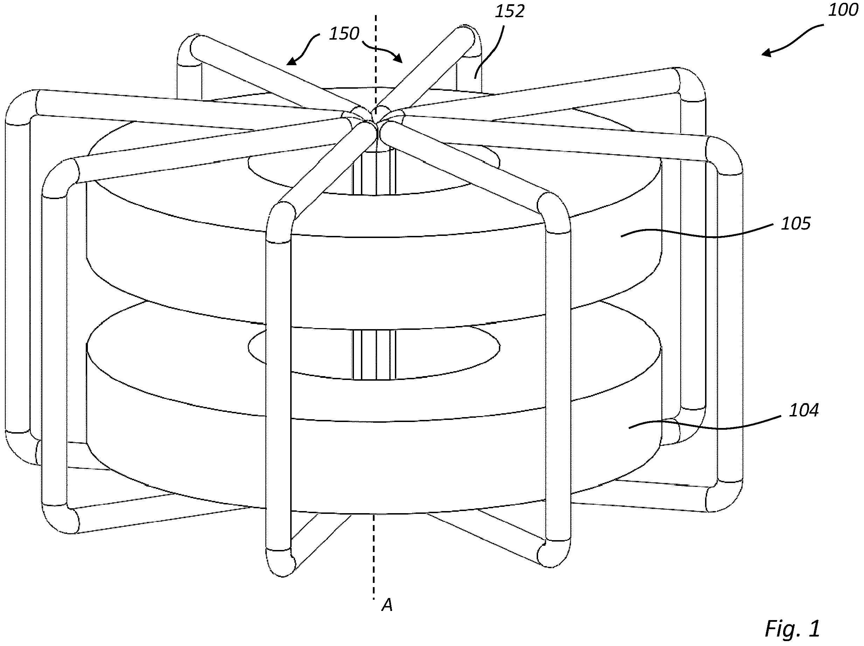

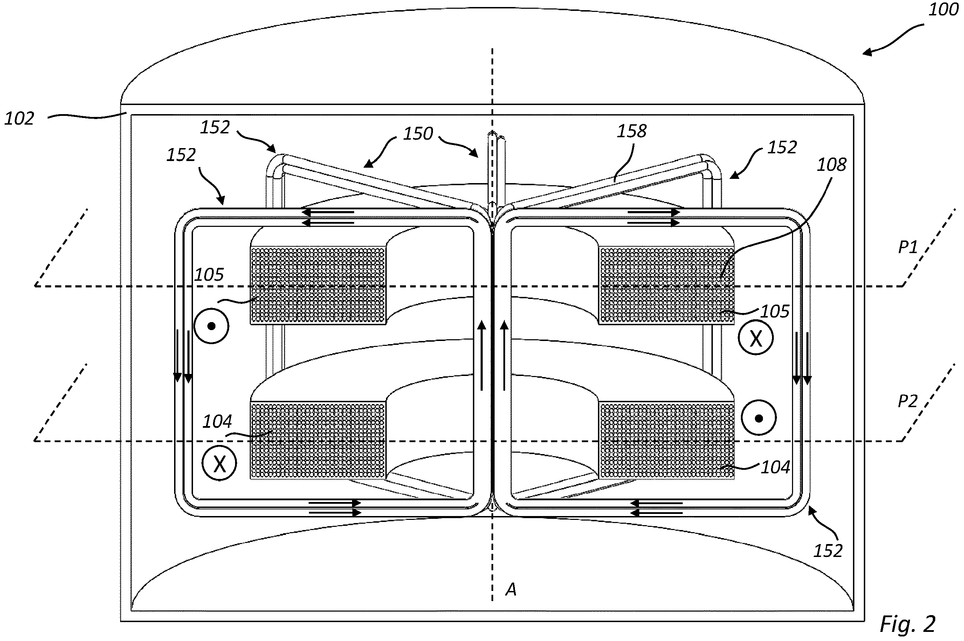

Figs 1 and 2 are respective perspective and perspective-cross-sectional views of magnet systems comprised in a magnetic mirror machine 100 according to a first configuration.

In the example of Figs 1 and 2, the magnetic mirror machine 100 is rotationally symmetric, or at least substantially or generally rotationally symmetric, around a symmetry axis A lying in the plane of Fig. 1.

The magnetic mirror machine 100 may be used for plasma confinement, and may comprise customary shielding and/or a plasma vessel 102, (Fig. 2) enclosing the rest of the magnetic mirror machine 100 as known per se in the art. The shielding may comprise neutron shielding, as known per se. In particular, the magnetic mirror machine 100 may be comprised in a fusion reactor and/or used in a fusion reactor.

As evident from Figs 1 and 2, the magnetic mirror machine 100 comprises a plurality of electromagnetic coils. In particular, the magnetic mirror machines comprises two electromagnetic coils 104, 105. Each electromagnetic coil 104, 105 may be arranged in a circular loop, as in Figs 1 and 2. Each electromagnetic coils 104, 105 of the plurality of electromagnetic coils is circularly symmetric with respect to the common symmetry axis A.

Each of the plurality of electromagnetic coils may be arranged for carrying a respective direct current, the direction of which being conventionally indicated using respective a dot or cross in Fig. 2. In particular, the plurality of electromagnetic coils of the magnetic mirror machine 100 comprises a first coil 104 arranged to carry a current in a first direction, and a second coil, offset in an axial direction from the first coil 105 and arranged to carry a current in a second direction opposite to the first direction, as conventionally marked with dots and crosses in Fig. 2. For example, the respective absolute value of the respective currents carried by each of the first coil 104 and the second 105 inner coil may be equal. Alternatively, two or more coils may carry currents having unequal absolute values.

Throughout this disclosure, a cross symbol should be understood as signifying a direct current flowing into the page, while a dot symbol should be understood as signifying a current flowing out of the page.

In the configuration of Figs 1 and 2, as is evident from those figures, the two electromagnetic coils 104, 105 are disposed co-axially, in the example of Fig. 1 along the symmetry axis A. Further, the coils 104, 105 may be longitudinally spaced with respect to the symmetry axis A.

Each of the two electromagnetic coils 104, 105 has a respective symmetry plane P1, P2. As is evident from Fig. 2, the symmetry axis A may be normal to each of the symmetry planes P1, P2.

Further, as evident from Figs 1 and 2, each of the two electromagnetic coils 104, 105 may comprise a plurality of electric conductors 108.

Each electromagnetic coil throughout this disclosure may be manufactured and arranged using methods, materials, compounds, and the like, known per se in the art, for example using, copper, or some other suitable metal as conductor.

Alternatively, each electromagnetic coil may be a superconductor coil. Suitable superconductor materials may include YBCO, Bi2223, 2212, Nb3SN, NbTi, MgB2 and/or ReBCO. The electromagnetic coils throughout this disclosure may, for example, be so-called high-temperature superconductor coils.

As known in the art, a superconductor coil may comprise internal structure. For example, within each superconductor coil, superconducting material may be arranged in filaments, strands, cables, ropes, or the like. using methods generally known in the art. The cross-section of the coil, as referred to throughout this disclosure, should then be understood as an enclosing envelope of this internal structure.

For example, the superconductor coils throughout this disclosure may be manufactured and arranged using methods, materials, compounds, and the like, as detailed in D Uglietti: A review of commercial high temperature superconducting materials for large magnets: from wires and tapes to cables and conductors, Supercond. Sci. Technol. 32 (2019) 053001 (29pp), https://doi.org/10.1088/1361-6668/ab06a2, incorporated herein by reference. Further, the superconductor coils may be cooled using methods generally known per se in the art.

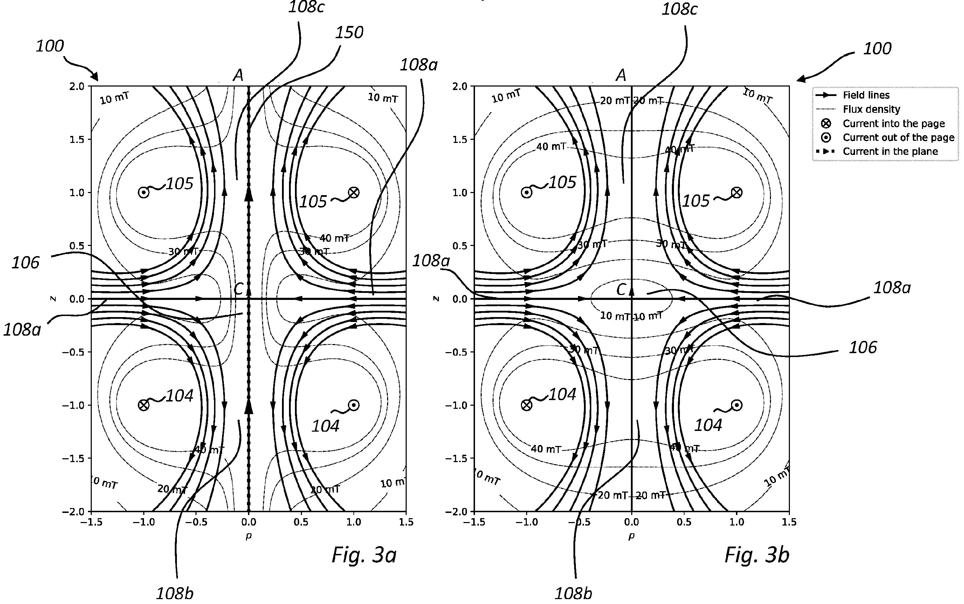

As know per se in the art, a Biconic cusp electromagnetic coil configuration, as exemplified by the first electromagnetic coil 104 and the second electromagnetic coil 105 of the magnetic mirror machine 100, of Figs 1 and 2 allows for the creation of a plasma confinement area 106 (cf. Figs 3a and 3b), as will be elaborated upon further below.

Further, the magnetic mirror machine 100 comprises a further electromagnetic coil 150, wherein the further electromagnetic coil crosses the planes of the electromagnetic coils 104, 105 of the plurality of electromagnetic coils through the respective electromagnetic coil. In particular the further electromagnetic coil 150 crosses the respective symmetry planes P1, P2, as defined above, although the present inventive concept should be understood to include the cases of the further electromagnetic coil 150 crossing any plane coinciding with the respective electromagnetic coil of the plurality of electromagnetic coils throughout its circumference.

In the example of Figs 1 and 2, the further electromagnetic coil 150 crosses the planes P1, P2 of both the first electromagnetic coil 104 and the second electromagnetic coil 105. However, equally possible would be the further electromagnetic coil crossing the plane of only one of the further electromagnetic coils.

In the example of Figs 1 and 2, the further electromagnetic coil 150 is a toroidal field coil, i.e., having a plurality of windings, each winding extending in a poloidal or quasi-poloidal direction and the plurality of windings being disposed along a toroidal direction around the circumference of the magnetic mirror machine. In particular, in the example of Fig 1 and 2, collectively, the sub-coils 152 are arranged so that the further electromagnetic coil 150 is a toroidal field coil.

Further, in the example of Figs 1 and 2, the further electromagnetic coil is formed by a plurality of discrete sub-coils 152 distributed around the circumference of the further electromagnetic coil. However, equally possible would be any other geometry with a winding of the further electromagnetic coils crossing the plane of at least one of the plurality of electromagnetic coils 104, 105. For example, the further electromagnetic coil may be a single, circular coil. In another example, the further electromagnetic coil may be linear and located at or adjacent to the symmetry axis A, with an arbitrary geometry outside of the plurality of electromagnetic coils 104, 105.

Each sub-coil 152 may comprise one or more electric conductors 158. The conductors may be conventional electric conductors or superconducting electric conductors as exemplified elsewhere in this disclosure.

Further, as exemplified in Figs 1 and 2, each sub-coil 152 may be arranged adjacent to the symmetry axis A. Equally possible would be for at least one of the sub-coils 152, or the whole further electromagnetic coil 150, to coincide with the symmetry axis A in at least one point, or along a linear segment of the symmetry axis A.

Each electric conductor 158 of each sub-coil 152 of the further electromagnetic coil 150 is arranged to carry a direct current as indicated by arrows in Fig. 2. In the example of Figs 1 and 2, the direct current in each coil is arranged to flow in a direction pointing upward in the plane of Fig. 2 adjacent to the symmetry axis A. However, a current arranged to flow in the opposite direction would be equally possible. Each of the electric conductors 158 of a sub-coil 150 may be arranged to have electric currents of equal magnitude, or different ones.

Figs 3a and 3b show, in respective cross-sectional views, simulated magnetic field lines generated by the magnet systems according to the first configuration. Further, typical magnetic flux densities are shown, with iso-B levels marked with dashed lines.

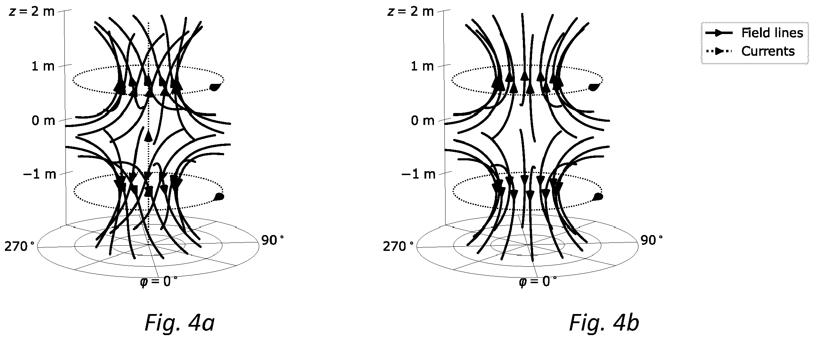

Figs 4a and 4b show, in respective perspective views, simulated magnetic field lines generated by the magnet systems according to the first configuration.

The simulations of Figs 3a, 3b, 4a, and 4b were performed using line current sources for the first electromagnetic coil 104, the second electromagnetic coil 105, and the further electromagnetic coil 150. However, as the skilled person would readily appreciate, such simulation will closely approximate the filed configuration created by the magnetic mirror machine 100 of Figs 1 and 2.

The simulations of Figs 3b and 4b show, as an examples useful for understanding the invention, simulation results with currents running in the first electromagnetic coil 104 and the second electromagnetic coil 105, but not in the additional electromagnetic coil 150. Thus, the simulation results of Figs 3b and 4b correspond to a conventional biconic cusp configuration. Thus, magnetic field configuration of Figs 3b and 4b has no toroidal component, i.e., no magnetic field component normal to the cross-sectional plane of the figure.

As know per se in the art, a Biconic cusp electromagnetic coil configuration, as exemplified by the first electromagnetic coil 104 and the second electromagnetic coil 105 of magnetic mirror machine 100, of Figs 1 and 2 allows for the creation of a plasma confinement area 106 (cf. Figs 3a and 3b).

As is evident from Figs 3a and 3b, the plasma confinement area 106 is limited by respective mirror areas 108a,b,c of increased magnetic flux density relative to an area around the center C of the magnetic mirror machine, as is evident from the magnetic field line spacing in each mirror area 108a,b,c, as compared to the area around the center C, and as known per se in the art. In other words, each respective mirror area 108a,b,c comprises converging magnetic field lines as approached from the area around the center C of the magnetic mirror machine 100. In particular, the Biconic cusp magnetic field configuration of the magnetic mirror machine 100 of Fig. 1, there are more than two mirror areas 108a,b,c, viz., three mirror areas 108a,b,c.

A first mirror area 108a is formed between the first coil 104 and the second coil 105, at an outer radial periphery of the plasma confinement area 106. The field lines at the first mirror area 108a thus extend in a radial direction of the magnetic mirror machine 100, i.e., perpendicularly the symmetry axis A.

A second mirror area 108b is formed radially inside the first coil 104 at an axially lower periphery of the plasma confinement area 106. In other words, the first coil 104 is located radially outside the second mirror area 108b. The field lines at the second mirror area 108b thus generally extend in a longitudinal direction of the magnetic mirror machine 100, i.e., along the symmetry axis A.

A third mirror area 108c is formed radially inside the second coil 105 at an axially upper periphery of the plasma confinement area 106. In other words, the second coil 105 is located radially outside the third mirror area 108c. The field lines at the third mirror area 108c thus generally extend in a longitudinal direction of the magnetic mirror machine 100, i.e., along the symmetry axis A.

The plasma confinement area 106 thus has a compact topology, thus having no holes, around a center point C of the magnetic mirror machine 100. In the example of Fig. 1, the plasma confinement area has rotational symmetry around the symmetry axis A.

As is evident from Fig. 3b, the conventional biconic cusp geometry of that figure leads to a point having zero magnetic flux density at the center C of the magnetic mirror machine 100.

In contrast, comparing with Fig. 3a, with the further electromagnetic coil 150 carrying a current, the point having zero magnetic flux density at the center C of the magnetic mirror machine 100 is eliminated. Further, as is evident by comparing Figs 4a and 4b, the current of the further electromagnetic coil 150 introduces a toroidal component to the magnetic field, present in Fig. 4a, but absent in Fig. 4b.

Further, the present inventive concept is equally applicable to a magnetic mirror machine comprising a first inner coil arranged to carry a current in a first direction and a second inner coil offset in an axial direction from said first inner coil and arranged to carry a current in a second direction opposite to said first direction, a first outer coil located radially outside said first inner coil and arranged to carry a current in said second direction; and a second outer coil located radially outside said second inner coil and arranged to carry a current in said first direction.

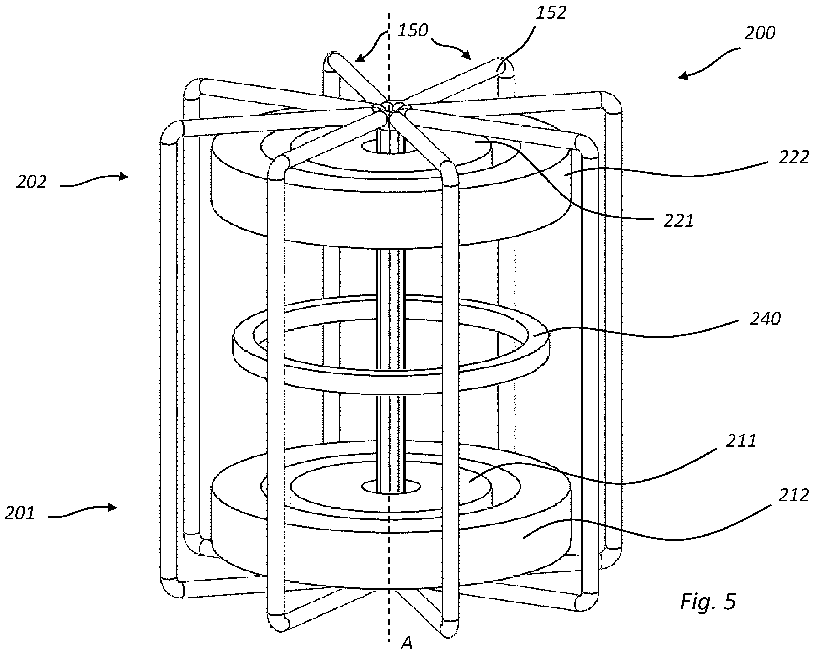

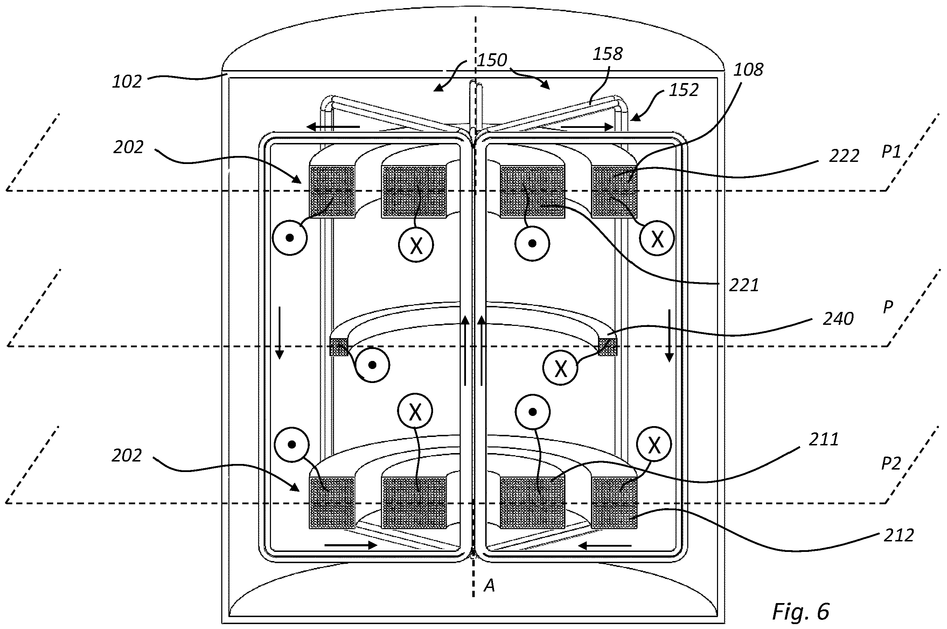

A magnetic mirror machine 200 corresponding to such a second configuration is shown in Figs 5 and 6, being respective perspective and perspective-cross-sectional views of magnet systems comprised in a magnetic mirror machine 200 according to the second configuration. The concept of and advantages of such a configuration is disclosed in detail in applications PCT/EP2020/081762 and PCT/EP2021/081409 which are hereby incorporated by refence in their entireties.

As is evident from Figs 5 and 6, the magnetic mirror machine 200 comprises a plurality of electromagnetic coils 221, 222, 211, 212 longitudinally-disposed along the symmetry axis A. Each electromagnetic coil 221, 222, 211, 212 may be arranged in a circular loop, as in Figs 5 and 6 and may be arranged for each carrying a direct current arranged for producing an open-field-line plasma confinement area 106, as will be elaborated upon below. Thus, as in the example of Figs 5 and 6, the magnetic mirror machine 200 is rotationally symmetric, or at least substantially or generally rotationally symmetric, around a symmetry axis A lying in the plane of Fig. 6.

The magnetic mirror machine 200 may be used for plasma confinement, and may comprise customary shielding and/or a plasma vessel 102 (Fig. 6), as known in the art. The shielding may comprise neutron shielding, as known per se. In particular, the magnetic mirror machine 300 may be comprised in a fusion reactor and/or used in a fusion reactor.

In the configuration of Figs 5 and 6, as is evident from those figures, the electromagnetic coils 221, 222, 211, 212 are disposed co-axially, in the example of Figs 5 and 6 along the symmetry axis A. Further, the electromagnetic coils 221, 222, 211, 212 may be longitudinally spaced with respect to the symmetry axis A.

In particular, the electromagnetic coils 221 and 222 located above the symmetry plane P constitute a first magnet system 202, wherein the coil 221 is arranged to carry a direct current in a first direction and the coil is arranged to carry a direct current in a second, opposite, direction, as indicated with dots and crosses in Fig. 6.

Further, the electromagnetic coils 211 and 212 located below the symmetry plane P constitute a second magnet system 201, arranged with mirror symmetry with respect to the first magnet system 202 relative to the symmetry plane P, which thus is located between the first magnet system and the second magnet system.

Each of the two magnet systems 202, 201 has a respective symmetry plane P1, P2. As is evident from Fig. 6, the symmetry axis A may be normal to each of the symmetry planes P1, P2.

Further, as evident from Figs 5 and6, each of the two electromagnetic coils may comprise a plurality of electric conductors 108.

Further, the magnetic mirror machine 200 comprises a further electromagnetic coil 150, wherein the further electromagnetic coil crosses the planes of the electromagnetic coils 221, 222, 240, 211, 212 of the plurality of electromagnetic coils through the respective electromagnetic coil.

In particular the further electromagnetic coil 150 crosses the respective symmetry planes P1, P2, as defined above, although the present inventive concept should be understood to include the cases of the further electromagnetic coil 150 crossing any plane coinciding with the respective electromagnetic coil of the plurality of electromagnetic coils throughout its circumference.

The further electromagnetic coil has a geometry and general features as described above in conjunction with the first configuration and the magnetic mirror machine 100 of Figs 1 and 2, mutatis mutandis.

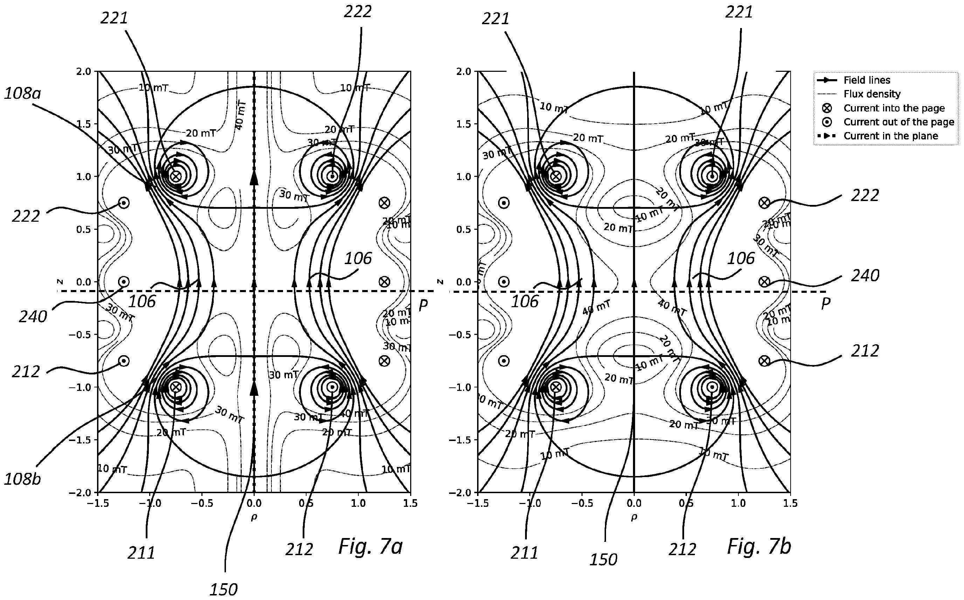

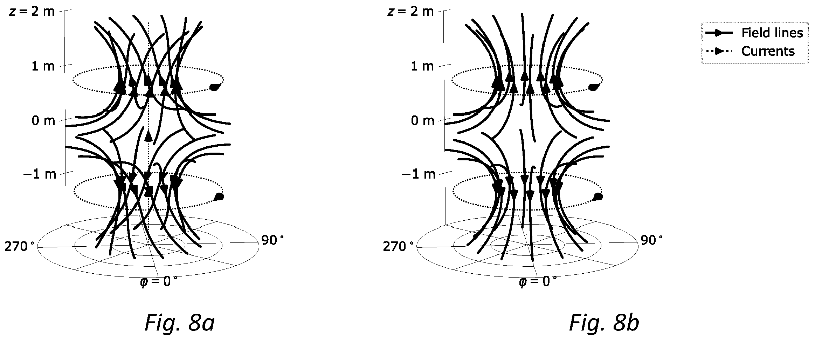

Figs 7a and 7b show, in respective cross-sectional views, simulated magnetic field lines generated by the magnet systems according to the second configuration. Further, typical magnetic flux densities are shown, with iso-B levels marked with dashed lines. Figs 8a and 8b show, in respective perspective views, simulated magnetic field lines generated by the magnet systems according to the second configuration.

The simulations of Figs 7a, 7b, 8a, and 8b were performed using line current sources for the first electromagnetic coil 104, the second electromagnetic coil 105, and the further electromagnetic coil 150 and with the electromagnetic coils 222 and 212 slightly axially offset, respectively, with to the electromagnetic coils 221 and 211 . However, as the skilled person would readily appreciate, such simulation will closely approximate the filed configuration created by the magnetic mirror machine 200 of Figs 5 and 6.

The simulations of Figs 7a and 8a show, as an examples useful for understanding the invention, simulation results with currents running in the electromagnetic coils 221, 222, 211, 212, and 240, but not in the additional electromagnetic coil 150. Thus, the simulation results of Figs 7a and 8a correspond to a configuration similar to that disclosed in patent applications PCT/EP2020/081762 and PCT/EP2021/081409. Thus, magnetic field configuration of Figs 7b and 8b has no toroidal component, i.e., no magnetic field component normal to the cross-sectional plane of the figure.

As is evident from Figs 7a and 7b, the magnetic mirror machine according to the second configuration allows for the creation of a plasma confinement area 106 limited by respective mirror areas 108a,b of increased magnetic flux density relative to an area at the symmetry plane P of the magnetic mirror machine as is evident from the magnetic field line spacing in each mirror area 108a,b, as compared to the area around the symmetry plane P of the magnetic mirror machine. In other words, each respective mirror area 108a,b comprises converging magnetic field lines as approached from the area around the symmetry plane of the magnetic mirror machine 200.

The plasma confinement area 106 thus extends in a longitudinal direction, along the symmetry axis A, through the magnetic mirror machine 200, with the magnetic field lines in the plasma confinement area 106 running in the longitudinal direction as well.

As is evident from Fig. 7b, the configuration with no current running through the additional coil 150 leads points N having zero magnetic flux density.

In contrast, comparing with Fig. 7a, with the further electromagnetic coil 150 carrying a current, the points N having zero magnetic flux density at are eliminated. Further, as is evident by comparing Figs 8a and 8b, the current of the further electromagnetic coil 150 introduces a toroidal component to the magnetic field, present in Fig. 8a, but absent in Fig. 8b.

Further, the present inventive concept is equally applicable to a magnetic mirror machine wherein the plurality of electromagnetic coils comprises a first magnet system comprising a first plurality of concentrically arranged electromagnetic coils, comprising a first electromagnetic coil arranged to carry a current in a first direction; and a second electromagnetic coil arranged to carry a current in a second direction opposite to said first direction; and a second magnet system comprising a second plurality of concentrically arranged electromagnetic coils, arranged with mirror symmetry with respect to said first magnet system relative to a symmetry plane located between said first magnet system and said second magnet system.

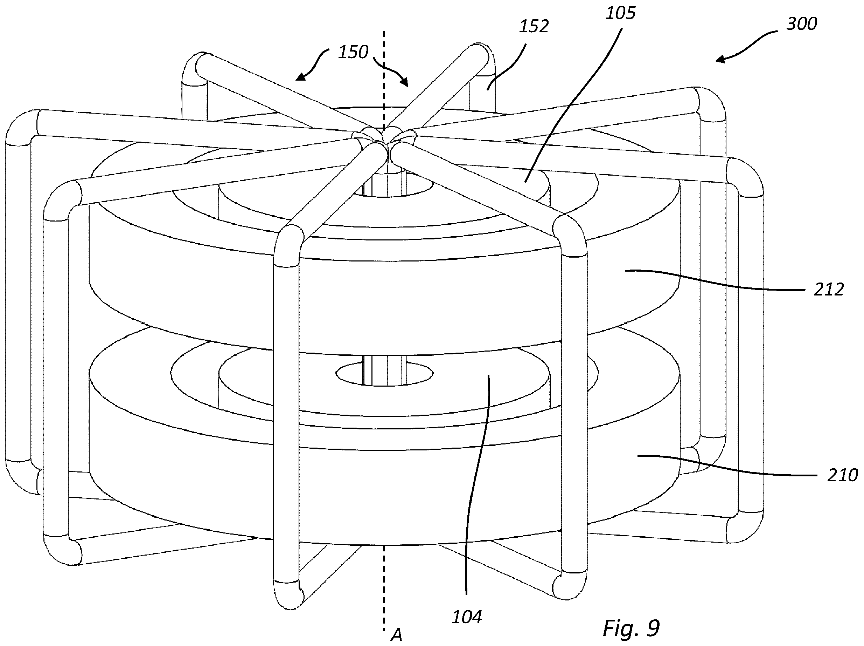

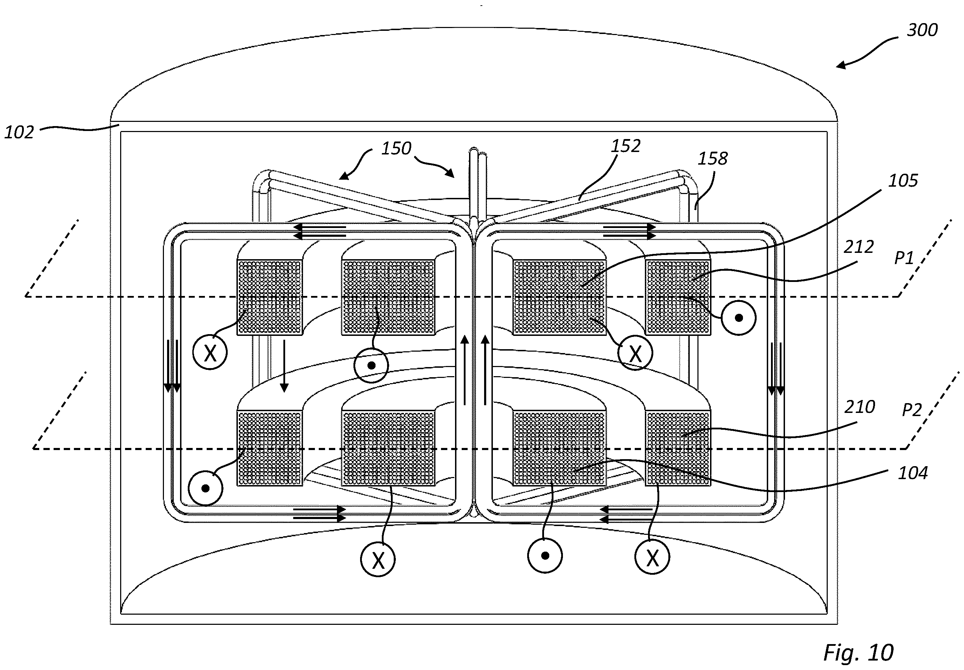

A magnetic mirror machine corresponding to such a third configuration is shown in Figs 9 and 10, being respective perspective and perspective-cross-sectional views of magnet systems comprised in a magnetic mirror machine 300 according to the third configuration.

With reference to Figs 9 and 10, the magnetic mirror machine 300 is rotationally symmetric, or at least substantially rotationally symmetric, around a symmetry axis A.

The magnetic mirror machine 300 may be used for plasma confinement, and may comprise customary shielding and/or a plasma vessel 102 (Fig. 10), enclosing the rest of the magnetic mirror machine 300 as known per se in the art. The shielding may comprise neutron shielding, as known per se. In particular, the magnetic mirror machine 300 may be comprised in a fusion reactor and/or used in a fusion reactor.

In the example of Figs 9 and 10, the magnetic mirror machine 300 is rotationally symmetric, or at least substantially rotationally symmetric, around a symmetry axis A lying in the plane of Fig. 10.

As evident from Figs 9 and 10, the magnetic mirror machine 300 comprises a plurality of electromagnetic coils 104, 105, 210, 212, viz, four electromagnetic coils 104, 105, 210, 212. Each electromagnetic coil 104, 105, 210, 212 may be arranged in a circular loop, as in Figs 9 and 10, and may be arranged for carrying a respective direct current, the direction of which being conventionally indicated using respective a dot or cross in Fig. 10.

As with the magnetic mirror machine 100 of Figs 1 and 2, the magnetic mirror machine 300 of Figs 9 and 10 comprises a first inner coil 104 arranged to carry a current in a first direction and a second inner coil offset in an axial direction from the first inner coil 105 and arranged to carry a current in a second direction opposite to the first direction. In the configuration of Figs 9 and 10, as is evident from that figure, the first inner coil 104 and the second inner coil 105 may be disposed co-axially, in the example of with respect to a symmetry axis A.

Further, the magnetic mirror machine 300 of Figs 9 and 10 comprises a first outer coil 210 and a second outer coil 212. The first outer coil 210 is located radially outside the first inner coil 104 with respect to the symmetry axis A. The first inner coil 104 and the first outer coil 210 are thus concentrically arranged.

The first outer coil 210 is arranged to carry a current in the second direction, i.e., the same direction as that of the current carried by the second inner coil 105.

The second outer coil 212 is located radially outside the second inner coil 105 with respect to the symmetry axis A. The second inner coil and the second outer coil 212 are thus concentrically arranged.

The second outer coil 212 is arranged to carry a current in the second direction, i.e., the same direction as that of the current carried by the first inner coil 104.

As evident from Figs 9 and 10, the second inner coil 105 and the second outer coil 210 may geometrically, disregarding the respective currents through the coils, be arranged with mirror symmetry at the symmetry plane P of the magnetic mirror machine 300 with respect to the first inner coil 104 and the first outer coil 212.

The electromagnetic coils 105 and 21 have common symmetry plane P1, and the electromagnetic coils 104 and 210 have a common symmetry plane P2, as evident in Fig. 10.

Further, the magnetic mirror machine 300 comprises a further electromagnetic coil 150, wherein the further electromagnetic coil crosses the planes of the electromagnetic coils 104, 105, 210, 212 of the plurality of electromagnetic coils through the respective electromagnetic coil.

In particular the further electromagnetic coil 150 crosses the respective symmetry planes P1, P2, as defined above, although the present inventive concept should be understood to include the cases of the further electromagnetic coil 150 crossing any plane coinciding with the respective electromagnetic coil of the plurality of electromagnetic coils throughout its circumference.

The further electromagnetic coil has a geometry and general features as described above in conjunction with the first configuration and the magnetic mirror machine 100 of Figs 1 and 2, mutatis mutandis.

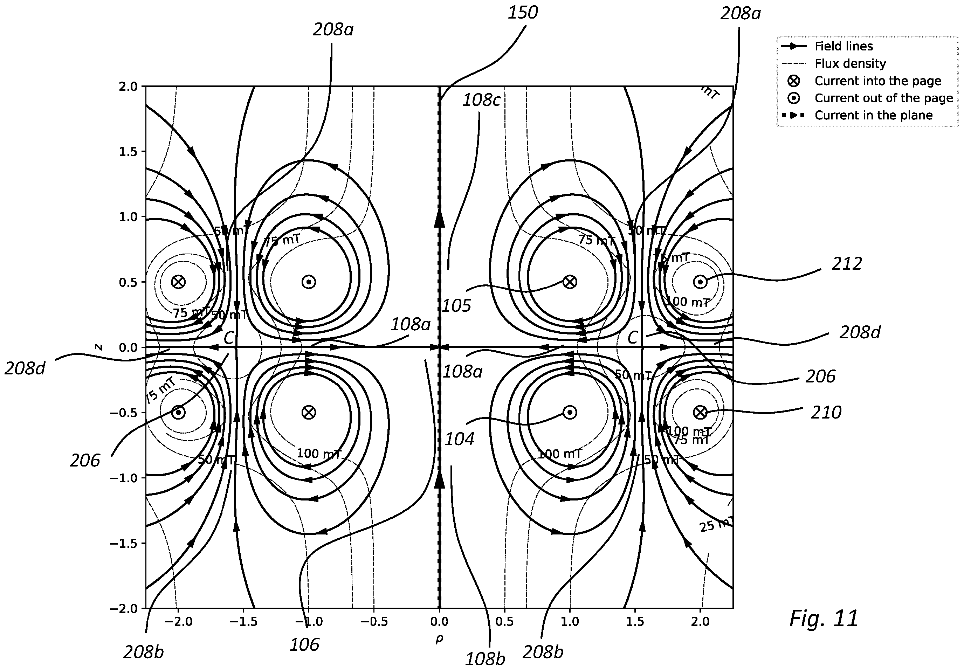

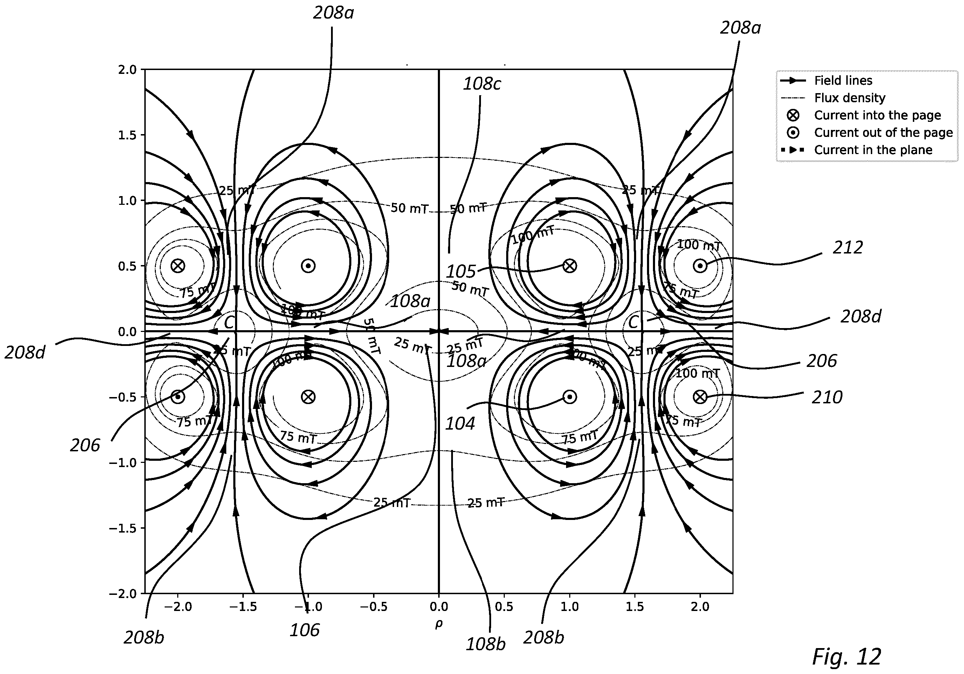

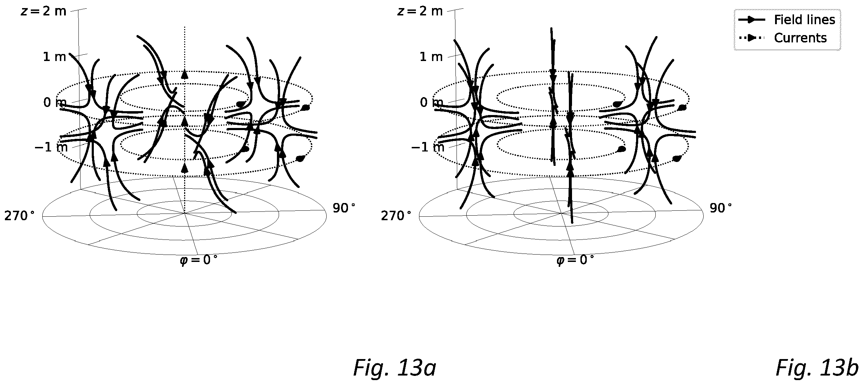

Figs 11 and 12 show, in respective cross-sectional views, simulated magnetic field lines generated by the magnet systems according to the third configuration. Further, typical magnetic flux densities are shown, with iso-B levels marked with dashed lines. Figs 13a and 13b show, in respective perspective views, simulated magnetic field lines generated by the magnet systems according to the second configuration.

The simulations of Figs 11, 12, 13a, and 13b were performed using line current sources for the electromagnetic coils 104, 105, 210, 212, 150. However, as the skilled person would readily appreciate, such simulation will closely approximate the filed configuration created by the magnetic mirror machine 300 of Figs 9 and 10.

The simulations of Figs 12 and 13b show, as an examples useful for understanding the invention, simulation results with currents running in the electromagnetic coils 104, 105, 210, 212, but not in the additional electromagnetic coil 150. Thus, magnetic field configuration of Figs 12 and 13b has no toroidal component, i.e., no magnetic field component normal to the cross-sectional plane of the figure.

Just as for the magnetic mirror machine 100 according to the first configuration of Figs 1 and 2, the coil arrangement of the magnetic mirror machine 300 of Figs 9 and 10 allows for the arranging of a central plasma confinement area 106 located at the center C of the plasma confinement device 300.

As is evident from Figs 11 and 12, the plasma central confinement area 106, just as in the Biconic cusp configuration of Figs 3a, 3b, 4a, and 4b, is limited by respective mirror areas 108a,b,c of increased magnetic flux density relative to an area around the center C of the magnetic mirror machine 300, as is evident from the magnetic field line spacing in each mirror area 108a,b,c and the area around the center C of the magnetic mirror machine. In other words, each respective mirror area 108a,b,c comprises converging magnetic field lines, as approached from the center C of the magnetic mirror machine 200. In particular, the central plasma confinement area has more than two mirror areas, viz., three mirror areas 108a,b,c.

A first mirror area 108a of the central plasma confinement area 106 is formed between the first inner coil 104 and the second inner coil 105, at an outer radial periphery of the central plasma confinement area 106. The field lines at the first mirror area 108a thus generally extend in a radial direction of the magnetic mirror machine 300, i.e., perpendicularly to the symmetry axis A.

A second mirror area 108b of the central plasma confinement area 106 is formed radially inside the first inner coil 104 at an axially lower periphery of the central plasma confinement area 106. In other words, the first inner coil 104 is located radially outside the second mirror area 108b. The field lines at the second mirror area 108b thus generally extend in a longitudinal direction of the magnetic mirror machine 300, i.e., along the symmetry axis A.

A third mirror area 108c of the central plasma confinement area 106 is formed radially inside the second inner coil 105 at an axially upper periphery of the plasma confinement area 106. The field lines at the third mirror area 108c thus generally extend in a longitudinal direction of the magnetic mirror machine 300, i.e., along the symmetry axis A.

The central plasma confinement area 106 thus has a compact topology, thus having no holes, around a center point C of the magnetic mirror machine 300. The plasma confinement area has rotational symmetry around the symmetry axis A.

Further to the central plasma confinement area 106, and different form the Biconic cusp configuration of the magnetic mirror machine 100 of Figs 1 ans 2, the coil arrangement of the magnetic mirror machine 300 of Figs 9 and 10 allows for the arranging of a further plasma confinement area in the form of an outer plasma confinement area 206, the outer plasma confinement area 206 having an annular topology.

As is evident from Figs 11, 12, 13a, and 13b, an outer plasma confinement area 206, is limited by respective mirror areas 108a, 208b,c,d of increased magnetic flux density relative to a central area of the outer plasma confinement area 206, as is evident from the magnetic field line spacing in each mirror area 108a, 208b,c,d and the central area of the outer plasma confinement area 206. The central area of the plasma confinement area 206 is axially located between, on the one hand, the first inner coil 104 and the first outer coil 210, and, on the other hand, the second inner coil 105 and the second outer coil 212. The central area of the outer plasma confinement area 206 is radially located between, on the one hand, the first inner coil 104 and the second inner coil 105, and, on the other hand, the first outer coil 210 and the second outer coil 212.

In other words, each respective mirror area 108a, 208b,c,d of the outer plasma confinement area 206 comprises converging magnetic field lines. In particular, the outer plasma confinement area 206 has more than two mirror areas, viz., four mirror areas 108a, 208b,c,d.

A first mirror area 108a of the outer plasma confinement area 206 is identical to the first mirror area 108a of the central plasma confinement area 106 and is formed between the first inner coil 104 and the second inner coil 105, at an inner radial periphery of the outer plasma confinement area 206. The field lines at the first mirror area 108a thus generally extend in a radial direction of the magnetic mirror machine 300, i.e., perpendicularly to the symmetry axis A.

A second mirror area 208d of the outer plasma confinement area 206 is formed between the first outer coil 210 and the second outer coil 212, at an outer radial periphery of the outer plasma confinement area 206. The field lines at the second mirror area 108d thus generally extend in a radial direction of the magnetic mirror machine 300, i.e., perpendicularly to the symmetry axis A.

A third mirror area 208b of the outer plasma confinement area 206 is formed radially between the first inner coil 104 and the first outer coil 210 at an axially lower periphery of the outer plasma confinement area 206. The field lines at the third mirror area 208c thus generally extend in a longitudinal direction of the magnetic mirror machine 300, i.e., in parallel to the symmetry axis A.

A fourth mirror area 208c of the outer plasma confinement area 206 is formed radially between the second inner coil 105 and the second outer coil 212 at an axially upper periphery of the outer plasma confinement area 206. The field lines at the fourth mirror area 208c thus generally extend in a longitudinal direction of the magnetic mirror machine 300, i.e., in parallel to the symmetry axis A.

The outer plasma confinement area 206 thus has an annular, i.e., donut-shaped topology, i.e., having a hole, radially outside the symmetry axis A. The outer plasma confinement area 206 has rotational symmetry around the symmetry axis A.

As is evident from Figs 12 and 13b, the configuration with no current running through the additional coil 150 leads to an area near the center of the outer plasma confinement area 208d having zero magnetic flux density.

In contrast, comparing with Figs 11 and 13a, with the further electromagnetic coil 150 carrying a current, the area near the center of the outer plasma confinement area 208d having zero magnetic flux density is eliminated. Further, as is evident by comparing Figs 13a and 13b, the current of the further electromagnetic coil 150 introduces a toroidal component to the magnetic field, present in Fig 13a, but absent in Fig. 13b.

Typical dimensions of the magnetic mirror machines 100, 200, 300 may be as follows. Each of the electromagnetic coils of the plurality of electromagnetic coils may have in the range 1-3 m, and preferably of about 2 m.

Coils of the plurality of electromagnetic coils may have inner radii in the range 1-3 m and outer radii in the range 8-20 m and preferably about 11 m.

Each magnetic mirror machine 100, 200, 300, may have an outer radius of 10-20 m and preferably about 15 m and a height of 10-20 and preferably about 12 m.

The inventive concept has mainly been described above with reference to example embodiments. However, as is readily appreciated by a person skilled in the art, other embodiments than the ones disclosed above are equally possible within the scope of the inventive concept, as defined by the appended patent claims.

## Claims

1. A magnetic mirror machine (100, 200, 300) for plasma confinement, said magnetic mirror machine comprising a plurality of electromagnetic coils (104, 105, 221, 222, 211, 212) each circularly symmetric with respect to a common symmetry axis (A) and disposed along said symmetry axis for creating an open-field-line plasma confinement area (106) limited by a plurality of mirror areas (108a,b,c,d) of increased magnetic flux density relative to a central area of said plasma confinement area, wherein said magnetic mirror machine further comprises at least one further electromagnetic coil (150), wherein said further electromagnetic coil crosses a plane (P1, P2) of an electromagnetic coil of said plurality of electromagnetic coils through said electromagnetic coil.

2. The magnetic mirror machine of claim 1, wherein said at least one further electromagnetic coil crosses a respective plane of each coil of said plurality of electromagnetic coils.

3. The magnetic mirror machine of any one of claims 1-2, wherein said further electromagnetic coil is arranged at said symmetry axis.

4. The magnetic mirror machine of any one of claims 1-3, wherein said further electromagnetic coil is a toroidal field coil.

5. The magnetic mirror machine of any one of claims 1-4, wherein said plurality of electromagnetic coils comprises a first electromagnetic coil and a second electromagnetic coil, wherein said second electromagnetic coil is arranged to carry a current in an opposite direction to a current carried by said first electromagnetic coil, creating said plasma confinement area between said first electromagnetic coil and said second electromagnetic coil.

6. The magnetic mirror machine of any one of claims 1-4, wherein said plurality of electromagnetic coils comprises:
a first magnet system comprising a first plurality of concentrically arranged electromagnetic coils, comprising:
a first electromagnetic coil arranged to carry a current in a first direction; and
a second electromagnetic coil arranged to carry a current in a second direction opposite to said first direction; and
a second magnet system comprising a second plurality of concentrically arranged electromagnetic coils, arranged with mirror symmetry with respect to said first magnet system relative to a symmetry plane (P) located between said first magnet system and said second magnet system.

7. The magnetic mirror machine of claims 6, wherein said plurality of electromagnetic coils further comprises a third magnet system (2104) arranged radially outside said plasma confinement area, said third magnet system comprising at least one electromagnetic coil.

8. The magnetic mirror machine (200) of any one of claims 1-4, wherein said plurality of electromagnetic coils comprises:
a first inner coil (104) arranged to carry a current in a first direction; and
a second inner coil (105) offset in an axial direction from said first inner coil (104) and arranged to carry a current in a second direction opposite to said first direction,
a first outer coil (210) located radially outside said first inner coil (104) and arranged to carry a current in said second direction; and
a second outer coil (212) located radially outside said second inner coil (105) and arranged to carry a current in said first direction.

9. A fusion reactor comprising the magnetic mirror machine of any one of claims 1-8.

10. Use of the magnetic mirror machine of any one of claims 1-7 for confining a plasma.

11. Use of the magnetic mirror machine of any one of claims 1-8 in a fusion reactor.

12. A method of operating a magnetic mirror machine (200), comprising arranging a plurality of electromagnetic coils each circularly symmetric with respect to a common symmetry axis and disposed along said symmetry axis for creating an open-field-line plasma confinement area limited by a plurality of mirror areas of increased magnetic flux density relative to a central area of said plasma confinement area, wherein said magnetic mirror machine further comprises at least one further electromagnetic coil, wherein said further electromagnetic coil crosses a plane of an electromagnetic coil of said plurality of electromagnetic coils.

13. The method of claim 12, wherein said method is performed for confining a plasma.

14. The method of any one of claims 12-13, wherein said method is performed in a fusion reactor.
